# EUROPÄISCHE PATENTSCHRIFT

(11) **EP 3 108 308 B1**
(45) Veröffentlichungstag und Bekanntmachung des Hinweises auf die Patenterteilung: **23.03.2022**
(21) Anmeldenummer: 15703252.5
(22) Anmeldetag: 29.01.2015
(51) Int. Cl.: G04G 7/00, G04G 5/00

(54) **VERFAHREN ZUR BESTIMMUNG EINES MASTER-ZEITSIGNALS, FAHRZEUG UND SYSTEM**
METHOD FOR DETERMINING A MASTER TIME SIGNAL, VEHICLE, AND SYSTEM
PROCÉDÉ DE DÉTERMINATION D'UN SIGNAL TEMPOREL MAÎTRE, VÉHICULE ET SYSTÈME ASSOCIÉS

(30) Priorität: 20.02.2014 DE 102014203059
(43) Veröffentlichungstag der Anmeldung: 28.12.2016
(73) Patentinhaber: Bayerische Motoren Werke Aktiengesellschaft, 80809 München (DE)
(72) Erfinder: ABO EL-FOTOUH, Mohamed, 80798 München (DE)
(86) Internationale Anmeldenummer: PCT/EP2015/051763
(87) Internationale Veröffentlichungsnummer: WO 2015/124395

(56) Entgegenhaltungen:
- EP-A2- 1 452 934
- WO-A1-2009/008585
- GB-A- 2 428 113
- US-A1- 2009 271 110

## Beschreibung

Die Erfindung betrifft ein Verfahren zu Bestimmung eines Master-Zeitsignals in einem Fahrzeug.

Es ist bereits bekannt, dass Fahrzeuge mit Speichermedien ausgestattet sind, welche das Auftreten von Fehlern aufzeichnen. Auch das Dokumentieren von Unfällen kann mit entsprechenden Speicheraufzeichnungen vorgenommen werden. Bei diesen Aufzeichnungen ist es besonders wichtig, dass die exakte Zeit des auftretenden Fehlers bzw. der genaue Unfallzeitpunkt protokolliert werden.

Außerdem ist es beispielsweise für den Verkauf von zeitlich begrenzten Lizenzen, wie diese für Kartendaten von Navigationsgeräten erhältlich sind, essentiell, dass das Produkt bzw. die Daten nach Ablauf der Lizenzzeit nicht mehr zur Verfügung stehen. Durch Manipulationen der Zeitangaben in einem Fahrzeug ist es bislang durchaus denkbar, dass Lizenzverstöße ermöglicht werden.

Derzeit bekannte Zeitbestimmungssysteme in Fahrzeugen, wie z.B. das Heranziehen der GPS-Zeit, stellen keine ununterbrochen verlässliche Zeitquelle dar. GPS-Signale können beispielsweise nur von Fahrzeugen empfangen werden, welche eine Kommunikationseinrichtung bzw. ein Navigationssystem aufweisen. Des Weiteren können GPS-Signale in Garagen oder Parkhäusern oftmals nicht empfangen werden. Auch ein Backend (zentraler Verwandlungsserver) eines Fahrzeuges kann nicht jederzeit ein zuverlässiges Zeitsignal zur Verfügung stellen, da auch eine Netzwerkverbindung zu dem Backend unterbrochen werden kann.

In GB 2 428 113 A wird ein Verfahren zur Zeitbestimmung offenbart, wobei das Verfahren von dem Empfangen und Auswerten von RDS-Signalen, nämlich Radio-Data-System-Signalen ausgeht. Vorzugsweise werden mehrere derartige Signale empfangen und ausgewertet, so dass ein Master-Zeitsignal, vorzugsweise durch Bildung eines Durchschnittswertes berechnet wird.

WO 2009/008585 A1 offenbart ein Zeitbestimmungssystem in Fahrzeugen, das GPS-Zeiten zur Auswertung heranzieht. Dies stellt keine ununterbrochen verlässliche Zeitquelle dar. In Garagen oder Parkhäusern können GPS-Signale oftmals nicht empfangen werden. Demnach muss bei Unterbrechung eines GPS-Signals auf eine interne Uhr, die einen Schwingquarz umfasst, zurückgegriffen werden.

Das in EP 1 452 934 A2 beschriebene Verfahren dient zur Ermittlung einer Zeitinformation, wobei als Anwendungsbeispiele z. B. Zugangskontrollen bzw. Zugangserfassungen zu bestimmten Einrichtungen wie Gebäuden oder die Erfassung der Nutzung bestimmter Dienste, beispielsweise die Erfassung des Zugriffs auf bestimmte Einrichtungen wie Datenbanken oder dergleichen, angegeben sind.

Ausgehend von diesem Stand der Technik ist es Aufgabe der vorliegenden Erfindung, ein Verfahren bereitzustellen, das der Bestimmung einer sicheren und zuverlässigen Zeitbasis für das Fahrzeug dient.

Die Aufgabe wird durch ein Verfahren gemäß dem Anspruch 1 gelöst.

Insbesondere wird die Aufgabe durch ein Verfahren zur Bestimmung eines Master-Zeitsignals in einem Fahrzeug umfassend die Schritte gemäß Patentanspruch 1 gelöst.

Demnach werden die Server-Zeitsignale von mindestens zwei Zeitservern zur Bestimmung eines Master-Zeitsignals herangezogen, wobei in einem ersten Bestimmungsschritt die beiden Server-Zeitsignale miteinander verglichen und die Abweichung voneinander, also die Zeitdifferenz zwischen den beiden Server-Zeitsignalen, bestimmt werden.

Diese erste Zeitdifferenz wird zunächst gespeichert bzw. zwischengespeichert, so dass in einem weiteren Schritt die Verfügbarkeit der jeweiligen Zeitserver bestimmt werden kann. In einem weiteren Schritt wird das Master-Zeitsignal unter Nutzung der gespeicherten ersten Zeitdifferenz bestimmt, so dass ein beispielsweise gemitteltes Zeitsignal das Master-Zeitsignal bildet. Ein derartiges Master-Zeitsignal wird zumindest dann bestimmt bzw. berechnet, wenn mindestens eines der Server-Zeitsignale nicht verfügbar ist. Auch wenn alle Zeitserver verfügbar sind, kann die Zeitdifferenz die Qualität des Master-Zeitsignals verbessern.

Theoretisch ist es denkbar, dass zum Zeitpunkt der Bestimmung des Master-Zeitsignals dieses als Systemzeitsignal definiert wird. D.h. der erste Zeitserver und der zweite Zeitserver können das Master-Zeitsignal empfangen, wobei bei einem entsprechend abweichenden ersten Server-Zeitsignal bzw. einem abweichenden zweiten Server-Zeitsignal, der erste Zeitserver und/oder der zweite Zeitserver ihre Zeiten anhand des übertragenen Master-Zeitsignals synchronisieren.

Das erfindungsgemäße Verfahren sieht vor, dass in einem weiteren Schritt g) das Master-Zeitsignal und/oder mindestens ein erstes und/oder zweites Server-Zeitsignal in einem Speicher abgelegt werden. Vorzugsweise erfolgt das Ablegen des Master-Zeitsignals und/oder mindestens eines ersten und/oder zweiten Server-Zeitsignals in verschlüsselter Form.

Außerdem kann es vorgesehen sein, dass das bestimmte bzw. berechnete Master-Zeitsignal an mindestens eine Steuereinrichtung bzw. ECU eines FahrzeugBordnetzes übertragen wird, so dass die Steuereinrichtungen und/oder Steuergeräte das Master-Zeitsignal als Steuereinrichtungs- bzw. Steuergerät-Zeitsignal adaptieren. Bei derartigen ECUs kann es sich beispielsweise um ein Navigationssystem handeln, welches mit einer zeitlich limitierten Lizenzsoftware betrieben wird. Theoretisch ist es auch möglich, dass das Master-Zeitsignal an Aufzeichnungsgeräte im Sinne einer Blackbox oder an Vorrichtungen übertragen wird, welche zur Unfalldetektion und/oder zum Auslösen eines Notrufs dienen.

Mindestens einer der Verfahrensschritte a) bis h) wird vorzugsweise periodisch wiederholt. D.h. das Bestimmen eines Master-Zeitsignals und das damit verbundene Empfangen von einem ersten und einem zweiten Server-Zeitsignal können in regelmäßigen Zeitabständen erfolgen, so dass durchgehend ein verlässliches Master-Zeitsignal bestimmt wird. Dies betrifft demnach insbesondere die Schritte a) bis f). Ebenso können die darauffolgenden Verfahrensschritte g) und h) periodisch wiederholt werden, so dass beispielsweise das Übermitteln des Master-Zeitsignals an verschiedenartige Steuereinrichtungen bzw. ECUs in einem derartigen zeitlichen Abstand fortlaufend übermittelt wird, sofern eine Steuereinrichtung bzw. ECU dies erforderlich macht. Die Wiederholung der Verfahrensschritte a) bis h) und/oder der Verfahrensschritte a) bis f) kann auch unregelmäßig, beispielsweise nach einem Triggersignal bzw. Auslösesignal, also getriggert, erfolgen. Ein Trigger- bzw. Auslösesignal kann beispielsweise von einer Steuereinrichtung bzw. ECU gesendet werden, sofern diese ein aktuelles Master-Zeitsignal benötigt.

Die Übermittlung des Master-Zeitsignals an eine so genannte Blackbox wird demnach in kleineren zeitlichen Abständen erforderlich sein, als die Übermittlung des Master-Zeitsignals an eine im Fahrzeug-Cockpit befindliche Uhranzeige. Bei einer derartigen Uhranzeige ist es meist nicht notwendig, dass die ausgegebene Zeit 100%ig stimmt. Ein zuverlässiges Master-Zeitsignal kann an die betreffende Steuereinrichtung übertragen werden, welche das Master-Zeitsignal inkrementiert.

Die Übertragung der Master-Zeit an ECUs des Fahrzeugbordnetzes kann über ein Ethernet, insbesondere ein BroadReach-Ethernet, und/oder einen CAN-Bus und/oder einen LIN-Bus und/oder einen MOST-Bus und/oder einen FlexRay-Bus erfolgen. Theoretisch ist es denkbar, dass das Übermitteln des Master-Zeitsignals an mehrere Steuereinrichtungen in unterschiedlichen Zeiträumen bzw. in unterschiedlichen Zeitzyklen erfolgt.

Es ist gemäß vorliegendem Verfahren möglich, dass sich das bestimmte Master-Zeitsignal von einem im Fahrzeug angezeigten Zeitsignal wie z.B. einer Uhranzeige unterscheidet. Mit Hilfe des vorliegenden Verfahrens soll sichergestellt werden, dass das Master-Zeitsignal bzw. das zugehörige Verfahren Anpassungsfähigkeit und Zuverlässigkeit vereint. Anpassungsfähigkeit ist in diesem Zusammenhang derart zu verstehen, dass es einem Fahrer beispielsweise ermöglicht werden kann, die angezeigte Uhr in einem Fahrzeug einzustellen bzw. zu verändern. Die Zuverlässigkeit des Master-Zeitsignals ist in diesem Zusammenhang dadurch gegeben, dass eine zur Veränderung freigeschaltete Anzeigeuhr und das zugehörige Server-Zeitsignal nur in geringem Maß hinsichtlich der Bestimmung des Master-Zeitsignals einfließt.

Erfindungsgemäß sind dem mindestens ersten Zeitserver und dem mindestens zweiten Zeitserver Gewichte zugeordnet, wobei die Gewichte des ersten Zeitservers und/oder des zweiten Zeitservers zur Bestimmung des Master-Zeitsignals genutzt werden, wobei die Gewichte, vorzugsweise verschlüsselt, in einem Speicher abgelegt sind. In anderen Worten wird jedem Zeitserver eines Fahrzeuges ein Gewicht zugeordnet, welches in einem Speicher abgelegt ist bzw. abgelegt werden kann. Das Gewicht eines Zeitserver kann beispielsweise die Verlässlichkeit und/oder Manipulationssicherheit und/oder Genauigkeit der übermittelten Server-Zeitsignale betreffen.

Das Gewicht wird zur Bestimmung des Master-Zeitsignals herangezogen, so dass das von einem Zeitserver übertragene Server-Zeitsignal in Abhängigkeit des Gewichtes in unterschiedlicher Art und Weise bzw. mit unterschiedlicher Gewichtung zur Bestimmung des Master-Zeitsignals herangezogen wird. Demnach wird beispielsweise einer einstellbaren Uhranzeige des Fahrzeuges ein geringeres Gewicht als beispielsweise eines von einem Backend übertragenen Zeitsignals zugeordnet. Weitere Indikatoren zur Bestimmung eines Gewichtes eines Zeitservers sind beispielsweise die Möglichkeit von Manipulationsversuchen bzw. die Häufigkeit von Übertragungsausfällen hinsichtlich des von einem Zeitserver zu übertragenden Server-Zeitsignals zur Bestimmung eines Master-Zeitsignals. Des Weiteren kann die Häufigkeit von beobachteten Zeitsprüngen in Zusammenhang mit einem Zeitserver bei der Zuordnung bzw. Vergabe eines Gewichtes herangezogen werden.

Es kann eine periodische oder dynamische Überprüfung bzw. Ermittlung des Gewichtes eines Zeitservers bzw. der Gewichte von mehreren Zeitservern und eine Ablage der überprüften und ermittelten Gewichte in einem Speicher erfolgen. Es ist denkbar, dass das Gewicht eines Zeitservers und somit des von dem Zeitserver gesendeten Server-Zeitsignals im Zusammenhang mit einer festgestellten Zeitdifferenz zum Master-Zeitsignal erfolgen kann. In anderen Worten ist das Gewicht eines Zeitservers beispielsweise dann zu überprüfen und evtl. neu zu ermitteln, wenn die Zeitdifferenz eines Server-Zeitsignals zum Master-Zeitsignal periodisch ansteigt. Auch ein festgestellter Manipulationsversuch kann die Überprüfung eines Gewichtes auslösen. Auch die Ermittlung von Zeitsprüngen und/oder Verlusten hinsichtlich der Genauigkeit des zu einem Zeitserver zugehörigen Server-Zeitsignals sind Anlass zur Überprüfung eines Gewichtes. Zusammenfassend kann ein Überprüfen/Ermitteln eines/der Gewichte erfolgen, wenn an einer/dem Zeitserver Manipulationsversuche und/oder Zeitsprünge und/oder Übertragungsausfälle festgestellt werden.

Das Ablegen des Master-Zeitsignals und/oder mindestens eines Server-Zeitsignals in einem Speicher kann periodisch vorgenommen werden. Die Periodizität kann beispielsweise dadurch hergestellt werden, dass das Speichern der Zeitsignale bei Abschaltung eines Systems oder einer Vorrichtung zur Bestimmung einer Master-Zeitbasis erfolgt. Auch die Bestimmung bzw. Festlegung eines Speicherintervalls ist möglich. Das gespeicherte Master-Zeitsignal kann gegen Manipulationen gesichert werden. Dies kann durch Ablage bzw. Speicherung des Master-Zeitsignals auf einer Sicherheits-Hardware erfolgen. Auch die Verschlüsselung der gespeicherten Zeitsignale, insbesondere das verschlüsselte Speichern der Zeitsignale, dient zum Schutz vor Manipulationen. Die Verwendung eines Hardware-Sicherheitsmoduls (HSM) bzw. eines internen oder externen Peripheriegeräts zur Sicherstellung der Vertrauenswürdigkeit und Integrität von gespeicherten Master-Zeitsignalen und/oder von Server-Zeitsignalen und/oder von Gewichten und/oder von Zeitdifferenzen ist denkbar.

Die Übertragung eines Master-Zeitsignals an einen oder mehrere Zeitserver ist vorzugsweise über eine sichere Datenverbindung, insbesondere eine verschlüsselte und/oder signierte Datenverbindung, vorzunehmen. Zur Prüfung der Integrität sowie des Ursprungs des übertragenen Master-Zeitsignals kann die Übertragung auf Basis von MAC-Algorithmen erfolgen. So kann vermieden werden, dass das Master-Zeitsignal während der Übertragung an einen Zeitserver manipuliert wird und der Zeitserver manipulierte Zeitsignale empfängt. Auch die Übertragung eines ersten Server-Zeitsignals und/oder eines zweiten Server-Zeitsignals zur Bestimmung eines Master-Zeitsignals kann über eine gesicherte Datenübertragung bzw. Datenverbindung erfolgen, so dass die Server-Zeitsignale beim Übertragen an eine Master-Zeitsignaleinheit nicht manipulierbar bzw. veränderbar sind, so dass die Bestimmung eines Master-Zeitsignals auf unmanipulierten bzw. unveränderten Server-Zeitsignalen beruhen kann.

Bei dem mindestens ersten Zeitserver und/oder dem mindestens zweiten Zeitserver kann es sich um ein mobiles Endgerät wie z.B. ein Handy, Laptop, Handheld oder Tablet handeln. Des Weiteren ist es denkbar, dass der erste Zeitserver und/oder der zweite Zeitserver ein Navigationssystem und/oder eine Fahrzeuguhr und/oder ein Radiogerät und/oder ein GPS-Empfänger und/oder ein Backend ist. Demnach kann das erste Server-Zeitsignal und/oder das zweite Server-Zeitsignal ausgehend von einem mobilen Endgerät und/oder einem Navigationssystem und/oder einer Fahrzeuguhr und/oder einem Radiogerät und/oder einem Backend empfangen werden.

Erfindungsgemäß ist ein Kalibrierungsschritt vorgesehen. In einem derartigen Kalibrierungsschritt wird das Server-Zeitsignal von einem bzw. dem Backend des Fahrzeuges empfangen werden, wobei dieses Server-Zeitsignal im Kalibrierungsschritt als Master-Zeitsignal definiert wird. Bei dem von einem Backend übertragenen Zeitsignal handelt es sich demnach um ein zuverlässliches, mit höchstem Gewicht versehenes Zeitsignal, so dass zu einem ersten Zeitpunkt, nämlich einem Kalibrierungsschritt, das Master-Zeitsignal durch Empfang eines Zeitsignals vom Backend bestimmt wird. Während eines derartigen Kalibrierungsschrittes ist es erfindungsgemäß vorgesehen, dass das Master-Zeitsignal mit dem ersten Server-Zeitsignal und dem zweiten Server-Zeitsignal verglichen wird und das die Gewichte in Abhängigkeit der ermittelten Zeitdifferenzen zu dem Master-Zeitsignal ermittelt werden.

Der Kalibrierungsschritt kann im Rahmen eines Offline-Betriebs erfolgen, d.h. während einer Verfahrensphase, in welcher kein Master-Zeitsignal bestimmt werden muss oder beispielsweise das Fahrzeug abgestellt und nicht bewegt wird. Im Rahmen eines derartigen Kalibrierungsschrittes können die Zeitdifferenz(en) des bzw. der Server-Zeitsignal(e) hinsichtlich der Größe der Zeitdifferenz gerankt werden, so dass den Zeitservern entsprechend des Rankings unterschiedlich ansteigende Gewichte zugeordnet werden.

Die Gewichte der Zeitserver können heuristisch bestimmt werden, d.h. in Zusammenhang mit Erfahrungswerten bezüglich der Wahrscheinlichkeit oder der Vermutung hinsichtlich eines Manipulationsversuches. Sofern Manipulationen festgestellt werden, kann das Gewicht des entsprechend manipulierten Zeitservers heruntergesetzt oder auf Null gesetzt werden. Bei einer nachfolgenden Bestimmung eines Master-Zeitsignals wird das von dem mit einem Gewicht "Null" versehenen Zeitserver ausgesendete Server-Zeitsignal nicht herangezogen.

Beim Abspeichern eines Master-Zeitsignals und/oder beim Übermitteln des Master-Zeitsignals an mindestens eine Steuereinrichtung und/oder beim Übermitteln des Master-Zeitsignals an mindestens einen Zeitserver, kann das Master-Zeitsignal mit einem Schlüssel bzw. einer Signatur versehen werden. Zusätzlich zur Signatur kann das Master-Zeitsignal mit einem Zähler versehen werden. Ein Zeitserver und/oder ein Speicher und/oder ein Steuergerät überprüft das empfangene Master-Zeitsignal zunächst anhand der Signatur und vorzugsweise des Weiteren anhand des Zählers. Der Zähler muss demnach bei jedem übertragenen Master-Zeitsignal periodisch ansteigen, so dass eine Manipulation bzw. die Integrität des Master-Zeitsignals anhand des Zählers überprüft werden kann. Demnach ist es nicht möglich, dass der Zähler bei mehrfach übertragenen Master-Zeitsignalen gleich bleibt oder abnimmt. Des Weiteren wird das übertragene Master-Zeitsignal auf Zeitsprünge bzw. Zählersprünge hin überprüft, so dass die Integrität auch anhand dieser Indikatoren geprüft werden kann.

Des Weiteren ist ein Wiederherstellungsverfahren hinsichtlich der Bestimmung eines Master-Zeitsignals möglich, so dass bei Feststellen von Manipulationsversuchen und/oder Systemausfällen das Master-Zeitsignal auf den Stand des letzten unmanipulierten Zustandes bzw. letztgeprüften Standes gesetzt werden kann. Auch die Wiederherstellung der Server-Zeitsignale nach Ausfällen und/oder Manipulationen ist durch Übermittlung eines Master-Zeitsignals aus dem Speicher möglich.

Theoretisch ist es denkbar, dass das Verfahren durch automatische Zeitänderungen bzw. Zeitumstellungen, wie diese aufgrund unterschiedlicher Zeitzonen oder der Umstellung von Sommer- auf Winterzeit möglich ist, keinen Einfluss auf das Master-Zeitsignal nehmen. Eine derartige Zeitänderung bzw. Zeitumstellung kann lediglich Einfluss auf die Zeitdifferenz nehmen.

Bei dem Bussystem zur Kommunikation mit mindestens einer Steuereinrichtung des Fahrzeuges kann es sich um einen CAN-Bus und/oder einen LIN-Bus und/oder einen MOST-Bus und/oder einen FlexRay-Bus handeln.

Auch hier ergeben sich ähnliche Vorteile, wie diese vorab erläutert wurden.

Die Master-Zeitsignal-Einheit dient demnach zum Empfang des ersten Server-Zeitsignals von einem ersten Zeitserver und einem zweiten Server-Zeitsignal von einem zweiten Zeitserver. Des Weiteren ist die Master-Zeitsignal-Einheit derart ausgebildet, dass diese das erste Server-Zeitsignal mit dem zweiten Server-Zeitsignal vergleicht und eine erste Zeitdifferenz bestimmt. Auch das Speichern bzw. Zwischenspeichern der ersten Zeitdifferenz wird von der Master-Zeitsignal-Einheit ausgelöst. Der Speicher kann von der Master-Zeitsignal-Einheit umfasst werden. Es ist auch denkbar, dass es sich um einen übergeordneten Speicher handelt. Des Weiteren ist die Master-Zeitsignal-Einheit derart ausgebildet, dass diese die Verfügbarkeit des ersten und/oder des zweiten Server-Zeitsignals ermittelt bzw. bestimmt. Letztendlich wird unter Nutzung der gespeicherten ersten Zeitdifferenz das Master-Zeitsignal mit Hilfe der Master-Zeitsignal-Einheit bestimmt. Dies erfolgt zumindest dann, wenn mindestens eines der Server-Zeitsignale nicht verfügbar ist.

Die Master-Zeitsignaleinheit weist einen oder mehrere Speicher auf, in welchem bzw. in welchen das Master-Zeitsignal und/oder das erste Server-Zeitsignal und/oder das zweite Server-Zeitsignal und/oder eine erste Zeitdifferenz zwischen dem ersten Server-Zeitsignal und dem zweiten Server-Zeitsignal abgelegt bzw. gespeichert ist. Bei dem beschriebenen Speicher bzw. den beschriebenen Speichern kann es sich um einen von der Master-Zeitsignal-Einheit umfassten Speicher handeln. Theoretisch ist auch die Ausbildung eines bzw. mehrerer externer Speicher denkbar.

Nachfolgend wird ein Ausführungsbeispiel beschrieben, das nicht unter die Ansprüche fällt:
Die Fig. zeigt dabei ein Fahrzeug zur Ausführung eines Verfahrens zur Bestimmung eines Master-Zeitsignals. Bei allen gestrichelt dargestellten Übertragungswegen und/oder den gestrichelt dargestellen Fahrzeugeinheiten handelt es sich lediglich um optionale Einheiten bzw. Datenverbindungen.

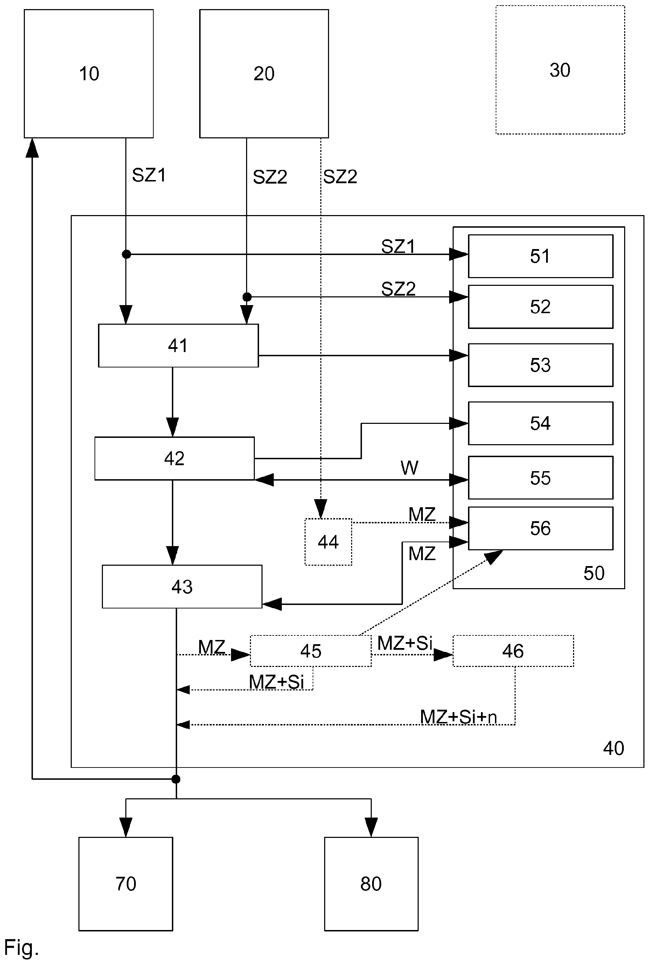

Das in der Figur dargestellte Fahrzeug umfasst einen ersten Zeitserver 10, welcher ein erstes Server-Zeitsignal SZ1 an die Master-Zeitsignal-Einheit 40 übermittelt. Des Weiteren ist ein zweiter Zeitserver 20 dargestellt, welcher ein zweites Server-Zeitsignal SZ2 an die Master-Zeitsignal-Einheit 40 übermittelt. Vorzugsweise erfolgt die Übertragung der Server-Zeitsignale SZ1 und SZ2 mittels eines gesicherten Übertragungskanals.

Die Master-Zeitsignaleinheit 40 empfängt das erste Server-Zeitsignal SZ1 sowie das zweite Server-Zeitsignal SZ2, wobei in einem Vergleicher 41 ein Vergleich des ersten Server-Zeitsignals SZ1 mit dem zweiten Server-Zeitsignal SZ2 zur Bestimmung mindestens einer ersten Zeitdifferenz ZD erfolgt.

Die erste Zeitdifferenz ZD kann in einem Zeitdifferenzspeicher 53 gespeichert werden. Die Zeitdifferenz ZD bzw. die in diesem Fall erste Zeitdifferenz wird in die Bestimmungseinheit 42 übertragen, wobei des Weiteren die Verfügbarkeit des ersten Server-Zeitsignals SZ1 und/oder des zweiten Server-Zeitsignals SZ2 in der Einheit 42 erfolgt. Die gespeicherte Zeitdifferenz ZD wird zur Bestimmung des Master-Zeitsignals MZ genutzt. Eine derartige Bestimmung des Master-Zeitsignals MZ erfolgt zumindest dann, wenn mindestens eines der Server-Zeitsignale SZ1 oder SZ2 nicht verfügbar ist. Die Verfügbarkeit der beiden Zeitserver 10 und 20 kann in einem Speicher 54 abgelegt bzw. gespeichert werden. Die Master-Zeitsignal-Einheit 40 weist im dargestellten Beispiel eine Übermittlungseinheit 43 auf, welche zur Übermittlung des vorher bestimmten Master-Zeitsignals MZ dient.

Vorliegend wird das Master-Zeitsignal MZ an eine erste Steuereinrichtung 70 sowie an eine zweite Steuereinrichtung 80 übertragen. Des Weiteren ist vorgesehen, dass das Master-Zeitsignal MZ an den ersten Zeitserver 10 übermittelt wird. Die Übermittlung des Master-Zeitsignals MZ an den ersten Zeitserver 10 dient zur Synchronisierung des ersten Zeitservers 10.

Vorliegend weist die Master-Zeitsignal-Einheit 40 eine Speichereinheit 50 mit mehreren Unterspeichern 51-56 auf. Im Speicher 51 werden die ersten Server-Zeitsignale SZ1 des ersten Zeitservers 10 gespeichert. Im Speicher 52 werden hingegen die zweiten Server-Zeitsignale SZ2 des zweiten Zeitservers 20 abgelegt und gespeichert. Wie bereits erwähnt dient der Speicher 53 zum Speichern der Zeitdifferenz ZD. In Speicher 54 können Daten hinsichtlich der Server-Verfügbarkeit abgelegt bzw. gespeichert werden. Beim Speicher 55 handelt es sich um den Speicher der Gewichte W. Demnach sind sowohl Gewichte W des ersten Zeitservers 10 als auch Gewichte W des zweiten Zeitservers 20 im Speicher 55 abgelegt. Im Speicher 56 werden die bzw. das Master-Zeitsignal(e) MZ abgelegt.

Beim ersten Zeitserver 10 handelt es sich vorliegend um eine Fahrzeuguhr. Demnach kann das bestimmte Master-Zeitsignal MZ nach dessen Ermittlung an die Fahrzeuguhr 10 übertragen werden. Bei dem zweiten Zeitserver 20 handelt es sich um das Backend des Fahrzeuges. Ebenfalls dargestellt ist ein dritter Zeitserver 30, um die beliebige Anzahl von Zeitservern und zu übertragenden Zeitserver-Signalen SZ3 darzustellen.

Das Master-Zeitsignal MZ wird sowohl an eine Steuereinrichtung 70, welches im dargestellten Beispiel ein Navigationsgerät ist, als auch an eine Steuereinrichtung 80, welches ein Protokollspeicher im Sinne einer Blackbox ist, übermittelt.

Sowohl dem ersten Zeitserver 10 als auch den zweiten Zeitserver 20 sind Gewichte W zugeordnet, welche zur Bestimmung des Master-Zeitsignals MZ genutzt werden. Die Gewichte W sind vorzugsweise verschlüsselt in dem Speicher 55 abgelegt. Es kann ein periodisches oder dynamisches Überprüfen und/oder Ermitteln der Gewichte W erfolgen. Sofern die Werte hinsichtlich der Gewichte W des ersten Zeitservers 10 und/oder des zweiten Zeitservers 20 geändert werden, erfolgt eine erneute Ablage in dem Speicher 55. Dies geht mit einem Überschreiben des Wertes im Speicher 55 einher. Das Überprüfen/Ermitteln eines Gewichtes W erfolgt vorzugsweise dann, wenn am ersten und/oder zweiten Zeitserver 10/20 Manipulationsversuche und/oder Zeitsprünge und/oder Übertragungsausfälle festgestellt werden.

Im vorliegenden Fall ist davon auszugehen, dass dem zweiten Zeitserver (Backend) 20 ein höheres Gewicht W als dem ersten Zeitserver (Fahrzeuguhr) 10 zugeordnet wird. Bei einem Backend ist von einer Gewichtung von bis zu 100% auszugehen.

In einem Kalibrierungsschritt kann das Master-Zeitsignal MZ von dem Backend bzw. dem zweiten Zeitserver 20 empfangen werden. Die Kalibrierungseinheit 44 empfängt demnach das zweite Server-Zeitsignal SZ2 vom zweiten Zeitserver 20, also dem Backend, und legt das Master-Zeitsignal MZ im Speicher 56 ab. In dem durchgeführten Kalibrierungsschritt wird das Master-Zeitsignal MZ, welches im Kalibrierungsschritt dem zweiten Server-Zeitsignal SZ2 entspricht, mit dem ersten Server-Zeitsignal SZ1 des ersten Zeitservers 10 verglichen. Die Kalibrierungseinheit 44 ermittelt das Gewicht W des ersten Zeitservers 10 in Abhängigkeit der ermittelten Zeitdifferenz ZD zwischen dem Master-Zeitsignal MZ und dem ersten Server-Zeitsignal SZ1. Sofern das Gewicht W des ersten Zeitservers 10 im Vergleich zu dem in Speicher 55 abgelegten Gewicht W gleich ist, muss das neu ermittelte Gewicht W nicht im Speicher 55 abgelegt werden. Bei einer Änderung des Gewichtes W wird das neu ermittelte Gewicht W in dem Speicher 55 abgelegt, so dass das ursprüngliche Gewicht W beispielsweise überschrieben wird.

Die Überprüfung bzw. Ermittlung eines Gewichtes W hinsichtlich des ersten Zeitservers 10 erfolgt vorzugsweise dann, wenn an dem Zeitserver 10, also der Fahrzeuguhr, ein Manipulationsversuch und/oder ein Zeitsprung und/oder ein Übertragungsausfall festgestellt werden kann.

Optional kann das dargestellte System des Weiteren eine Signatureinheit 45 und/oder einen Zähler 46 aufweisen. Mit Hilfe der Signatureinheit 45 kann das ermittelte Master-Zeitsignal MZ mit einer Signatur Si versehen werden. Anhand einer derartigen Signatur kann beispielsweise die Steuereinrichtung 70 feststellen, ob das Master-Zeitsignal MZ manipuliert wurde. Des Weiteren ist es möglich, dass das Master-Zeitsignal MZ mit einer Signatur im Speicher 56 abgelegt wird.

Zusätzlich oder alternativ kann vorgesehen sein, dass eine Zählereinheit 46 von der Master-Zeitsignaleinheit 40 umfasst wird. Die Zählereinheit 46 versieht das bestimmte Master-Zeitsignal MZ mit einem Zähler n, wobei dies sowohl für das Master-Zeitsignal MZ, als auch das mit einer Signatur Si versehene Master-Zeitsignal MZ+Si möglich ist.

Die Empfänger des Master-Zeitsignals MZ+Si+n, also der erste Zeitserver 10 und/oder die Steuereinrichtung 70 und/oder die Steuereinrichtung 80, können anhand des Wertes des Zählers n feststellen, ob das Master-Zeitsignal gemäß fortlaufend größer werdendem Zählerwert manipulationsfrei übertragen wurde. Sofern die Signatur Si fehlerhaft ist und/oder der Zählerwert n gleich bleibt und/oder der Zählerwert n abnimmt, kann davon ausgegangen werden, dass ein Manipulationsversuch hinsichtlich des übermittelten Master-Zeitsignals MZ+Si+n vorliegt.

In einer Ausführungsform der Erfindung, in dem der zweite Zeitserver (20) nicht dem Backend eines Fahrzeugs entpricht, umfasst das erfindungsgemäße Verfahren zur Bestimmung eines Master-Zeitsignals in einem Fahrzeug die Schritte:
a) Empfangen mindestens eines ersten Server-Zeitsignals (SZ1) von einem ersten Zeitserver (10);
b) Empfangen mindestens eines zweiten Server-Zeitsignals (SZ2) von einem zweiten Zeitserver (20);
c) Vergleichen des ersten Server-Zeitsignals (SZ1) mit dem zweiten Server-Zeitsignal (SZ2) zur Bestimmung mindestens einer ersten Zeitdifferenz (ZD);
d) Speichern der ersten Zeitdifferenz (ZD);
e) Bestimmen der Verfügbarkeit des ersten Server-Zeitsignals (SZ1) und/oder des zweiten Server-Zeitsignals (SZ2);
f) Nutzung der gespeicherten ersten Zeitdifferenz (ZD) zur Bestimmung des Master-Zeitsignals (MZ) zumindest dann, wenn mindestens eines der Server-Zeitsignale (SZ1; SZ2) nicht verfügbar ist,
g) Ablegen des, insbesondere verschlüsselten, Master-Zeitsignals (MZ) und/oder mindestens eines, insbesondere verschlüsselten, Server-Zeitsignals (SZ1; SZ2) in mindestens einem Speicher (51; 52; 56), wobei dem mindestens ersten Zeitserver (10) und dem mindestens zweiten Zeitserver (20) Gewichte (W) zugeordnet sind, welche zur Bestimmung des Master-Zeitsignals (MZ) genutzt werden, wobei die Gewichte (W), vorzugsweise verschlüsselt, in einem Speicher (55) abgelegt sind.

In einem erfindungsgemäßen Kalibrierungsschritt zur Bestimmung der Gewichte (W) des mindestens ersten Zeitservers (10) und des mindestens zweiten Zeitservers (20), wird ein Zeitsignal von einem Backend des Fahrzeugs (in diesem Fall nicht dem zweiten Zeitserver (20 gleichgesetzt) empfangen und im Kalibrierungsschritt als Master-Zeitsignal definiert wird, wobei es sich bei dem vom Backend des Fahrzeugs übertragenen Zeitsignal um ein zuverlässiges, mit höchstem Gewicht versehenes Zeitsignal handelt,
wobei in dem Kalibrierungsschritt das Master-Zeitsignal, das vom Backend des Fahrzeugs empfangen wird, mit dem ersten Server-Zeitsignal (SZ1) und dem zweiten Server-Zeitsignal (SZ2) verglichen wird und die Gewichte in Abhängigkeit der im Kalibrierungsschritt ermittelten Zeitdifferenzen des ersten Server-Zeitsignals (SZ1) und des zweiten Server-Zeitsignals (SZ2) zu dem Master-Zeitsignal ermittelt werden.

### Bezugszeichenliste

- 10: Erster Zeitserver
- 20: Zweiter Zeitserver
- 30: Dritter Zeitserver
- 40: Master-Zeitsignal-Einheit
- 41: Vergleicher
- 42: Bestimmungseinheit
- 43: Übermittlungseinheit
- 44: Kalibrierungseinheit
- 45: Signatureinheit
- 46: Zählereinheit
- 50: Speicher
- 51: Speicher erstes Server-Zeitsignal SZ1
- 52: Speicher zweites Server-Zeitsignal SZ2
- 53: Speicher Zeitdifferenz ZD
- 54: Speicher Server-Verfügbarkeit
- 55: Speicher Gewicht W
- 56: Speicher Master-Zeitsignal MZ
- 70: Steuereinrichtung
- 80: Steuereinrichtung
- SZ1: Erstes Server-Zeitsignal
- SZ2: Zweites Server-Zeitsignal
- SZ3: Drittes Server-Zeitsignal
- MZ: Master-Zeitsignal
- ZD: Zeitdifferenz
- W: Gewicht
- Si: Signatur
- n: Zähler

## Patentansprüche

1. Verfahren zur Bestimmung eines Master-Zeitsignals in einem Fahrzeug, umfassend die Schritte:
a) Empfangen mindestens eines ersten Server-Zeitsignals (SZ1) von einem ersten Zeitserver (10);
b) Empfangen mindestens eines zweiten Server-Zeitsignals (SZ2) von einem zweiten Zeitserver (20);
c) Vergleichen des ersten Server-Zeitsignals (SZ1) mit dem zweiten Server-Zeitsignal (SZ2) zur Bestimmung mindestens einer ersten Zeitdifferenz (ZD);
d) Speichern der ersten Zeitdifferenz (ZD);
e) Bestimmen der Verfügbarkeit des ersten Server-Zeitsignals (SZ1) und/oder des zweiten Server-Zeitsignals (SZ2);
f) Nutzung der gespeicherten ersten Zeitdifferenz (ZD) zur Bestimmung des Master-Zeitsignals (MZ) zumindest dann, wenn mindestens eines der Server-Zeitsignale (SZ1; SZ2) nicht verfügbar ist,
g) Ablegen des, insbesondere verschlüsselten, Master-Zeitsignals (MZ) und/oder mindestens eines, insbesondere verschlüsselten, Server-Zeitsignals (SZ1; SZ2) in mindestens einem Speicher (51; 52; 56), wobei
dem mindestens ersten Zeitserver (10) und dem mindestens zweiten Zeitserver (20) Gewichte (W) zugeordnet sind, welche zur Bestimmung des Master-Zeitsignals (MZ) genutzt werden, wobei die Gewichte (W), vorzugsweise verschlüsselt, in einem Speicher (55) abgelegt sind,
wobei das Verfahren weiter einen Kalibrierungsschritt zur Bestimmung der Gewichte (W) des mindestens ersten Zeitservers (10) und des mindestens zweiten Zeitservers (20) umfasst, in dem ein Zeitsignal von einem Backend des Fahrzeugs empfangen wird und im Kalibrierungsschritt als Master-Zeitsignal definiert wird, wobei es sich bei dem vom Backend des Fahrzeugs übertragenen Zeitsignal um ein zuverlässiges, mit höchstem Gewicht versehenes Zeitsignal handelt,
wobei in dem Kalibrierungsschritt das Master-Zeitsignal, das vom Backend des Fahrzeugs empfangen wird, mit dem ersten Server-Zeitsignal (SZ1) und dem zweiten Server-Zeitsignal (SZ2) verglichen wird und die Gewichte in Abhängigkeit der im Kalibrierungsschritt ermittelten Zeitdifferenzen des ersten Server-Zeitsignals (SZ1) und des zweiten Server-Zeitsignals (SZ2) zu dem Master-Zeitsignal ermittelt werden.

2. Verfahren nach Anspruch 1,
**gekennzeichnet durch**
h) Übermitteln des Master-Zeitsignals (MZ) an mindestens eine Steuereinrichtung (70; 80).

3. Verfahren nach einem der Ansprüche 1 bis 2,
**gekennzeichnet durch**
periodisches und/oder getriggertes Wiederholen mindestens einer der Schritte a) bis h), insbesondere der Schritte a) bis f).

4. Verfahren nach einem der vorangegangenen Ansprüche,
**gekennzeichnet durch**
periodisches oder dynamisches Überprüfen/Ermitteln eines/der Gewichte(s) (W) und Ablage in einem/dem Speicher (55).

5. Verfahren nach einem der vorangegangenen Ansprüche,
**dadurch gekennzeichnet, dass**
ein Überprüfen/Ermitteln eines/der Gewichte(s) erfolgt, wenn an mindestens einem/dem Zeitserver (10; 20) Manipulationsversuche und/oder Zeitsprünge und/oder Übertragungsausfälle festgestellt werden.

6. Verfahren nach einem der Ansprüche 1 bis 5,
**gekennzeichnet durch**
Empfangen eines/des ersten Server-Zeitsignals (SZ1) und/oder eines/des zweiten Server-Zeitsignals (SZ2) von einem mobilen Endgerät und/oder einem Navigationssystem und/oder einer Fahrzeuguhr und/oder einem Radiogerät.

## Claims

1. Method for determining a master time signal in a vehicle,
comprising the steps of:
a) receiving at least one first server time signal (SZ1) from a first time server (10);
b) receiving at least one second server time signal (SZ2) from a second time server (20);
c) comparing the first server time signal (SZ1) with the second server time signal (SZ2) in order to determine at least one first time difference (ZD);
d) storing the first time difference (ZD);
e) determining the availability of the first server time signal (SZ1) and/or the second server time signal (SZ2) ;
f) using the stored first time difference (ZD) in order to determine the master time signal (MZ) at least when at least one of the server time signals (SZ1; SZ2) is not available,
g) storing the, in particular encrypted, master time signal (MZ) and/or at least one, in particular encrypted, server time signal (SZ1; SZ2) in at least one memory (51; 52; 56), wherein
at least the first time server (10) and at least the second time server (20) have associated weights (W) that are used in order to determine the master time signal (MZ), the weights (W) being stored, preferably in encrypted form, in a memory (55),
wherein the method further comprises a calibration step in order to determine the weights (W) of at least the first time server (10) and at least the second time server (20), in which a time signal is received from a backend of the vehicle and is defined as master time signal in the calibration step, the time signal transmitted by the backend of the vehicle being a reliable time signal provided with the highest weight,
wherein the calibration step involves the master time signal received from the backend of the vehicle being compared with the first server time signal (SZ1) and the second server time signal (SZ2) and the weights being ascertained on the basis of the time differences, ascertained in the calibration step, of the first server time signal (SZ1) and the second server time signal (SZ2) in relation to the master time signal.

2. Method according to Claim 1,
**characterized by**
h) conveying the master time signal (MZ) to at least one control device (70; 80).

3. Method according to either of Claims 1 and 2, **characterized by**
repeating at least one of steps a) to h), in particular steps a) to f), periodically and/or when triggered.

4. Method according to one of the preceding claims, **characterized by**
periodically or dynamically reviewing/ascertaining a/the weight/s (W) and storing it/them in a/the memory (55) .

5. Method according to one of the preceding claims, **characterized in that**
a/the weight/s is/are reviewed/ascertained if tampering attempts and/or time jumps and/or transmission failures are detected on at least one/the time server (10; 20).

6. Method according to one of Claims 1 to 5, **characterized by**
receiving a/the first server time signal (SZ1) and/or a/the second server time signal (SZ2) from a mobile terminal and/or a navigation system and/or a vehicle clock and/or a radio appliance.

## Revendications

1. Procédé pour déterminer un signal horaire maître dans un véhicule, comprenant les étapes suivantes :
a) réception d'au moins un premier signal horaire de serveur (SZ1) en provenance d'un premier serveur horaire (10) ;
b) réception d'au moins un deuxième signal horaire de serveur (SZ2) en provenance d'un deuxième serveur horaire (20) ;
c) comparaison du premier signal horaire de serveur (SZ1) avec le deuxième signal horaire de serveur (SZ2) afin de déterminer au moins une première différence de temps (ZD) ;
d) mémorisation de la première différence de temps (ZD) ;
e) détermination de la disponibilité d'un premier signal horaire de serveur (SZ1) et/ou d'un deuxième signal horaire de serveur (SZ2) ;
f) utilisation de la première différence de temps (ZD) mémorisée pour déterminer le signal horaire maître (MZ) au moins lorsqu'au moins l'un des signaux horaires de serveur (SZ1 ; SZ2) n'est pas disponible ;
g) stockage du signal horaire maître (MZ), notamment crypté, et/ou d'au moins un signal horaire de serveur (SZ1 ; SZ2), notamment crypté, dans au moins une mémoire (51 ; 52 ; 56),
des poids (W) étant attribués au moins au premier serveur horaire (10) et au moins au deuxième serveur horaire (20), lesquels sont utilisés pour déterminer le signal horaire maître (MZ), les poids (W) étant stockés, de préférence cryptés, dans une mémoire (55),
le procédé comprenant en outre une étape d'étalonnage destinée à déterminer les poids (W) au moins du premier serveur horaire (10) et au moins du deuxième serveur horaire (20), en recevant un signal horaire en provenance d'une application principale du véhicule et le définissant en tant que signal horaire maître dans l'étape d'étalonnage, le signal horaire transmis par l'application principale du véhicule étant un signal horaire fiable pourvu du poids le plus élevé,
dans l'étape d'étalonnage, le signal horaire maître qui est transmis par l'application principale du véhicule étant comparé avec le premier signal horaire de serveur (SZ1) et le deuxième signal horaire de serveur (SZ2) et les poids étant identifiés en fonction des différences de temps du premier signal horaire de serveur (SZ1) et du deuxième signal horaire de serveur (SZ2) par rapport au signal horaire maître identifiées dans l'étape d'étalonnage.

2. Procédé selon la revendication 1, **caractérisé par** h) communication du signal horaire maître (MZ) à au moins un dispositif de commande (70 ; 80).

3. Procédé selon l'une des revendications 1 à 2, **caractérisé par**
répétition périodique et/ou déclenchée d'au moins l'une des étapes a) à h), notamment des étapes a) à f).

4. Procédé selon l'une des revendications précédentes, **caractérisé par**
contrôle/identification périodique ou dynamique d'un/des poids (W) et stockage dans une/la mémoire (55).

5. Procédé selon l'une des revendications précédentes, **caractérisé en ce que**
un contrôle/une identification d'un/des poids est effectué lorsque des tentatives de manipulation et/ou des sauts horaires et/ou des pannes de transmission sont constatés au niveau d'au moins un/du serveur horaire (10 ; 20) .

6. Procédé selon l'une des revendications 1 à 5, **caractérisé par**
réception d'un/du premier signal horaire de serveur (SZ1) et/ou d'un/du deuxième signal horaire de serveur (SZ2) en provenance d'un terminal mobile et/ou d'un système de navigation et/ou d'une horloge de véhicule et/ou d'un appareil radio.
